# EUROPEAN PATENT APPLICATION

(11) **EP 1 010 970 A1**
(43) Date of publication of application: **21.06.2000**
(21) Application number: 98123514.6
(22) Date of filing: 15.12.1998
(51) Int. Cl.: G01F 23/284

(54) **A level meter for dielectric liquids**

(71) Applicant: European Community, 2920 Luxembourg (LU)
(72) Inventor: Jorzik, Ernst, 21020 Travedona-Monate (IT); Anselmi, Massimo, Sesto-Calende (VA) (IT)
(74) Representative: Weinmiller, Jürgen

(57) **Abstract**

The invention relates to a level meter for dielectric liquids according to the reflectometer principle, comprising:
- a pulse generator (3) which emits electric pulses towards the surface of the liquid,
- and a reflectometer (4) analysing the echoes reflected from said surface.

According to the invention the meter further comprises an electric delay line (1, 2; 13, 2; 16, 19) which guides the transmitted and the reflected signals and is immersed into the liquid at least down to the lowest level which should be measured, this line having a short-circuit (5) at its lower end, the liquid to be measured being allowed to enter between the two conductors (1, 2; 13, 2; 16, 19) of the line, the pulse generator (3) being conceived to supply to said delay line sharp pulses having a rise time of below 1 ns.

One conductor (13, 16) of the line can be spiral-shaped in order to enhance the resolution of the meter.

## Description

The invention refers to a level meter for dielectric liquids according to the reflectometer principle, comprising
- a pulse generator which emits electric pulses towards the surface of the liquid,
- and a reflectometer analysing the echoes reflected from said surface.

The principle of RADAR measurements is known for measuring the distance of reflecting targets such as motor cars or airborne objets. Such a reflecting target can further consist of a surface of a liquid whose level should be monitored.

For an error-free measurement the path of the propagating wave should not present too many inhomogeneities such as flanges or partial or total obstructions which would reflect the wave and create false responses. The invention aims to get rid of this limitation and to propose a level meter for dielectric liquids contained in a recipient which presents many obstacles which reflect a high frequency wave.

The level meter according to the invention is defined in claim 1. Preferred embodiments of this level meter are defined in the secondary claims.

The invention will now be described in more detail by means of several embodiments and the enclosed drawings.
Figure 1 shows a cross-section view of a first embodiment of a delay line for a level meter according to the invention.
Figure 2 shows schematically a second embodiment of a delay line having a spiral-shaped conductor.
Figure 3 shows still an other embodiment of a delay line according to the invention.
Figure 4 shown a typical signal resulting from the level meter according to the invention.

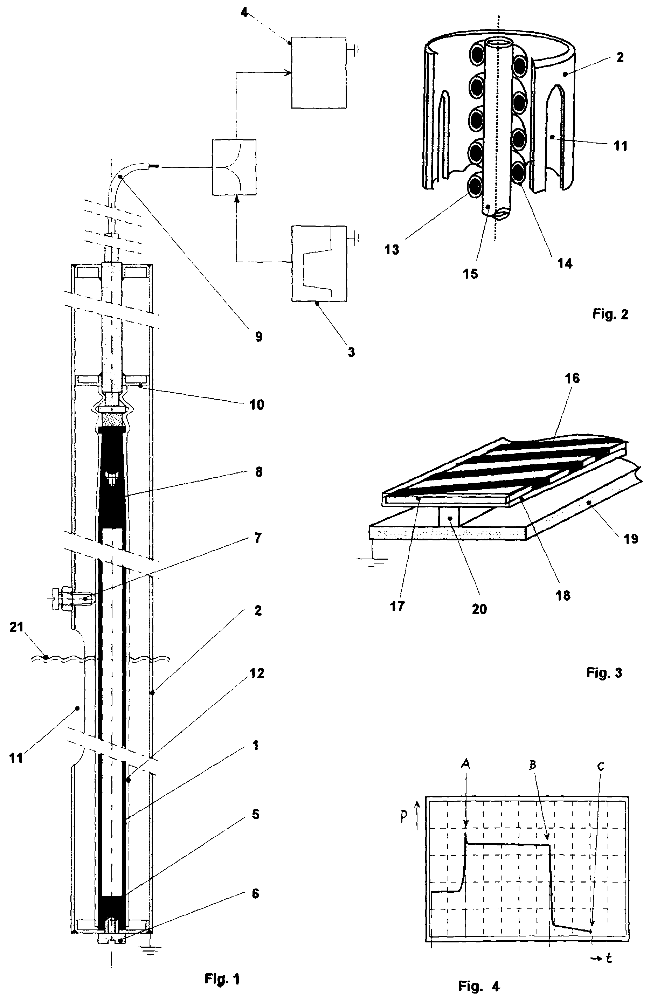

The level meter shown in figure 1 comprises a delay line having two conductors 1 and 2 which are connected through one end to a pulse generator 3 and a reflectometer 4. The pulse generator supplies one pulse for each measurement cycle. The rise time of this pulse is very short; it takes less than 1 ns to rise to 90% of its maximum amplitude. Its duration is longer than the two-way propagation time of the wave in the delay line.

The electronic device composed of the pulse generator and the reflectometer is well known in the RADAR field and will not be described in detail here.

The main item of the level meter according to the invention is a delay line which guides the wave in both directions, thereby eliminating false echoes from obstacles outside the delay line. This delay line extends preferably along a linear path and perpendicularly to the level 21 of the liquid to be measured. According to a variant, it could be arranged at an angle other than 90° with respect to the liquid level. The lower end of this delay line is short-circuited by a metal disc 5 which is secured via a screw 6 to the two conductors 1 and 2.

In the first embodiment the delay line is a coaxial line. Its inner conductor 1 is a tube (as shown) or a solid rod made of steel and having a diameter of e.g. 10 mm. The inner conductor is held in the outer conductor 2 by means of a plurality of adjustable studs 7 made of an insulating material such as polytetrafluoroethylene and screwed in an angularly spaced relationship into the outer conductor 2. Only one such stud is shown.

At the upper end the inner conductor 1 is fixed to a metal cone 8 by which it is electrically connected to a cable 9, especially a coaxial cable. The other conductor of this cable 9 is connected to the outer conductor 2 of the delay line by at least one metallic sleeve 10.

Along the length of the delay line the outer conductor 2 presents a plurality of openings 11 through which the liquid can enter into the interspace between the inner and outer conductor 1, 2 of the delay line.

If the liquid is not an ideal dielectric medium the currents there-through would reduce considerably the signal amplitude P over the length of the delay line. In this case it is useful to cover the entire inner conductor 1 of the delay line by a layer 12 of an insulating material such as polytetrafluoroethylene. The distributed capacitance of the delay line then includes both the (constant) dielectric of the layer 10 and that of the interspace which varies according to wether the liquid is present or not.

Figure 2 shows an alternative realisation of the delay line. It differs from the coaxial line according to figure 1 by the fact that the inner conductor 13 is a spiral-shaped copper conductor which is protected by an insulating sheath 14. It is wound about a glass tube 15 located in the centre of the delay line. The outer conductor 2 with its openings 11 corresponds to that of figure 1. Due to the spiral shape of the inner conductor the propagation velocity of a wave along the axis is reduced and the time resolution of the analyzed signal is correspondingly improved.

Still another embodiment of the delay line is shown in figure 3. In this case the conductor acting as "inner" conductor consists of a copper strip 16 which is wound about an insulating support 17 of flat rectangular cross-section. This support and the copper strip are sealed under a polytetrafluoroethylene layer 18 which has the same function as the layers 12 and 14.

The other conductor 19 consists either of a metal sheet 19 extending linearly along the support 17 or of the electrically conductive wall of the recipient in which the liquid to be measured is contained.The distance between both conductors is ensured by distance pieces 20.

In operation the outer conductor 2 (figure 1 or 2) or the conductor 19 (figure 3) is at the same ground potential as the electronic device 3, 4. A pulse of very short rise time (<1 ns) is injected into the delay line. The duration of this pulse is chosen to exceed the propagation time to and fro between the generator 3 and the lowest level to be measured. A typical echo signal resulting from this pulse is shown in figure 4. It presents three significant steps: A first step A corresponds to the transition between the cable 9 and the delay line 1, 2 or 13, 2 or 16, 19. The second step B varies in time t according to the level 21 of the liquid, and the third step C is representative of the short-circuit of the delay line constituted by the disc 5 at the lower end thereof. The position in time of the step B is then analyzed in the reflectometer 4. The steps A and C can easily be discerned from step B since they appear at fixed and well-known instants after the emission of the pulse from the generator 3.

The pulse frequency defining the cycle period depends on the processing speed of the reflectometer and can amount to 100 kHz or more. Therefore, the measurement can practically be considered as being continuous. Reflections of the pulse energy outside the delay line do practically not create echoes in the line and therefore do not disturb the analysis of the useful echoes in the reflectometer.

The level of the liquid to be measured depends upon the time between transmission instant and the reception instant of the step B originated by the liquid level. This time can be related to the distance between the liquid level and a reference level using the wave propagation speed. Calibration of the level meter according to the invention can be made by comparison with other liquid measuring methods or by measuring levels which are known from volume calculations.

The main advantage of the present invention over classical RADAR level meters consists in the fact that the level is allowed to be hidden behind obstacles such as cover lids, flanges etc. For this reason this meter is particularly adapted for use in closed recipients which are submitted in operation to high temperatures and/or pressures.

## Claims

1. A level meter for dielectric liquids according to the reflectometer principle, comprising:
- a pulse generator (3) which emits electric pulses towards the surface of the liquid,
- and a reflectometer (4) analysing the echoes reflected from said surface,
characterized in that it further comprises an electric delay line (1, 2; 13, 2; 16, 19) which guides the transmitted and the reflected signals and is immersed into the liquid at least down to the lowest level which should be measured, this line having a short-circuit (5) at its lower end, the liquid to be measured being allowed to enter between the two conductors (1, 2; 13, 2; 16, 19) of the line, the pulse generator (3) being conceived to supply to said delay line sharp pulses having a rise time of below 1 ns.

2. A level meter according to claim 1, characterized in that the line is a coaxial line in which the outer conductor (2) has openings (11) through which the liquid can enter into the annular space between the conductors (1, 2).

3. A level meter according to any one of the preceding claims, characterized in that one conductor (13, 16) of the line is spiral-shaped.

4. A level meter according to claim 3, characterized in that the spiral-shaped conductor (16) is wound about a dielectric support (17) of rectangular cross-section.

5. A level meter according to any one of claims 3 and 4, characterized in that the second conductor (19) is constituted by the electrically conductive wall of the recipient containing the liquid whose level should be measured.

6. A level meter according to any one of claims 3 to 5, characterized in that the second conductor (2, 19) is grounded to a common potential.
